# FASCICULE DE BREVET EUROPEEN

(11) **EP 2 515 721 B1**
(45) Date de publication et mention de la délivrance du brevet: **16.07.2014**
(21) Numéro de dépôt: 10810779.8
(22) Date de dépôt: 21.12.2010
(51) Int. Cl.: A47J 19/02, A47J 19/06

(54) **APPAREIL ÉLECTROMÉNAGER DE PRÉPARATION CULINAIRE COMPORTANT UNE VIS DE PRESSAGE ET UN DISPOSITIF DE PRÉDECOUPE**
ELEKTRISCHES KÜCHENGERÄT MIT DRUCKSCHRAUBE UND VORSCHNEIDELEMENT
ELECTRIC KITCHEN APPLIANCE COMPRISING A PRESSING SCREW AND A PRE-CUTTING DEVICE

(30) Priorité: 23.12.2009 FR 0906323
(43) Date de publication de la demande: 31.10.2012
(73) Titulaire: SEB S.A., 69130 Ecully (FR)
(72) Inventeur: CHARLES, Patrick, 65290 Louey (FR); DOMINGUEZ, Augustin, 65000 Tarbes (FR)
(74) Mandataire: Cémeli, Eric Philippe Laurent
(86) Numéro de dépôt international: PCT/FR2010/052860
(87) Numéro de publication internationale: WO 2011/077038

(56) Documents cités:
- WO-A1-2007/148872
- DE-B- 1 185 343
- DE-C- 920 389
- US-A- 1 443 535

## Description

La présente invention concerne le domaine technique des appareils électroménagers de préparation culinaire comportant une vis de pressage agencée dans un récipient de travail selon un axe principalement vertical.

La présente invention concerne plus particulièrement les appareils électroménagers de préparation culinaire de type pressoir, comportant une vis de pressage associée à un élément de filtration, pour réaliser des jus ou des coulis, et/ou de type hachoir, comportant une vis de pressage associée à un couteau rotatif en sortie, pour réaliser des préparations hachées.

Le document WO 2007 148872 divulgue un appareil comportant une vis de pressage agencée selon un axe vertical dans un récipient de travail disposé sur un boîtier moteur. L'extrémité supérieure de la vis de pressage pourrait être considérée comme un outil de prédécoupe. Toutefois cette extrémité supérieure de la vis de pressage ménage un espace important. Le récipient de travail est fermé par un couvercle présentant une goulotte. Du fait de l'espace important ménagé par l'extrémité supérieure de la vis de pressage, un appareil du type précité est soumis aux normes de sécurité des appareils à vis, plus contraignantes que les normes de sécurités des appareils de type robot à couteau rotatif.

L'objet de la présente invention est de mieux contrôler l'accès à la vis de pressage lors du fonctionnement de l'appareil.

Cet objet est atteint avec un appareil électroménager de préparation culinaire, comportant un boîtier logeant un moteur électrique relié à une sortie d'entraînement supérieure, une enceinte de travail comportant un récipient de travail fermé par un couvercle présentant une goulotte d'introduction d'aliments, le récipient de travail présentant une ouverture supérieure fermée par le couvercle, le récipient de travail présentant une sortie d'évacuation, une vis de pressage amovible susceptible d'être entraînée en rotation par la sortie d'entraînement supérieure étant agencée dans l'enceinte de travail, l'ouverture supérieure du récipient de travail permettant de mettre en place et de retirer la vis de pressage, du fait que l'entraînement en rotation de la vis de pressage est assuré par un élément rotatif monté amovible dans l'enceinte de travail, ledit élément rotatif comportant un disque de prédécoupe et un organe d'entraînement prévu pour être entraîné en rotation par la sortie d'entraînement supérieure. Ainsi en l'absence du disque de prédécoupe dans l'enceinte de travail, la vis de pressage ne peut être entraînée en rotation par la sortie d'entraînement supérieure. L'appareil ne peut être utilisé sans le disque de prédécoupe.

Selon un mode de réalisation préféré, le disque de prédécoupe est solidaire en rotation de la vis de pressage lorsque l'élément rotatif est en place dans l'enceinte de travail entre la vis de pressage et la goulotte d'introduction d'aliments. En alternative, un dispositif réducteur pourrait notamment être agencé entre le disque de prédécoupe et la vis de pressage.

Selon un mode de réalisation préféré, le disque de prédécoupe comporte un passage pour les aliments découpés agencé entre un bord d'attaque supérieur et un bord d'appui inférieur. Si désiré, le disque de prédécoupe peut porter plusieurs outils de coupe comportant un bord d'attaque supérieur. En alternative, un passage pour les aliments découpés pourrait notamment être ménagé en périphérie du disque de prédécoupe, de préférence en périphérie de la goulotte.

Selon un mode de réalisation préféré, le récipient de travail est monté amovible sur le boîtier. En alternative, le boîtier pourrait être solidaire du récipient de travail.

Selon une forme de réalisation adaptée à l'obtention de jus ou de coulis, un élément de filtration sépare l'enceinte de travail en un premier compartiment logeant la vis de pressage et le disque de prédécoupe, et un deuxième compartiment présentant la sortie d'évacuation. Alors, selon un mode de réalisation préféré, le disque de prédécoupe est solidaire en rotation de la vis de pressage lorsque l'élément rotatif est en place dans le premier compartiment entre la vis de pressage et la goulotte d'introduction d'aliments.

Selon une forme de réalisation adaptée à l'obtention de préparations hachées, la vis de pressage est agencée dans un récipient de travail formant un conduit reliant la goulotte d'introduction d'aliments à la sortie d'évacuation, une grille et un couteau rotatif étant agencés entre la vis de pressage et la sortie d'évacuation.

Selon un mode de réalisation préféré, l'élément de filtration est monté amovible dans le récipient de travail. En alternative, l'élément de filtration pourrait notamment être issu du récipient de travail.

Avantageusement alors, l'élément de filtration repose sur une paroi de fond du récipient de travail. En alternative ou en complément, l'élément de filtration pourrait notamment prendre appui sur une paroi latérale du récipient de travail.

Selon un mode de réalisation préféré, la vis de pressage repose sur l'élément de filtration. En alternative, la vis de pressage pourrait notamment reposer sur le récipient de travail.

Selon une première forme de réalisation, l'élément rotatif est amovible par rapport à la vis de pressage, l'élément rotatif disposé sur la vis de pressage entraînant en rotation la vis de pressage. Ainsi le disque de prédécoupe appartenant à l'élément rotatif peut être mis en place dans le récipient de travail indépendamment de la vis de pressage.

Avantageusement alors, l'élément rotatif repose sur la vis de pressage. Cette disposition permet de diminuer les efforts sur l'élément rotatif.

En complément ou en alternative, l'élément rotatif peut reposer sur la sortie d'entraînement supérieure. Cette disposition permet notamment d'utiliser le disque de prédécoupe sans utiliser la vis de pressage.

Selon une deuxième forme de réalisation, la vis de pressage appartient à l'élément rotatif. Ainsi le disque de prédécoupe est solidaire de la vis de pressage.

L'invention sera mieux comprise à l'étude de deux exemples de réalisation, pris à titre nullement limitatif, illustrés dans les figures annexées, dans lesquelles :
- la figure 1 illustre un appareil électroménager de préparation culinaire selon une première forme de réalisation de l'invention, représenté en élévation et en coupe partielle, le boîtier logeant le moteur étant représenté schématiquement,
- la figure 2 montre l'organe d'entraînement de l'élément rotatif de l'appareil illustré sur la figure 1,
- la figure 3 montre la vis de pressage de l'appareil illustré sur la figure 1,
- la figure 4 montre la sortie d'entraînement supérieure et une partie du boîtier de l'appareil illustré sur la figure 1,
- la figure 5 illustre un appareil électroménager de préparation culinaire selon une deuxième forme de réalisation de l'invention, représenté en élévation et en coupe partielle, le boîtier logeant le moteur étant représenté schématiquement.

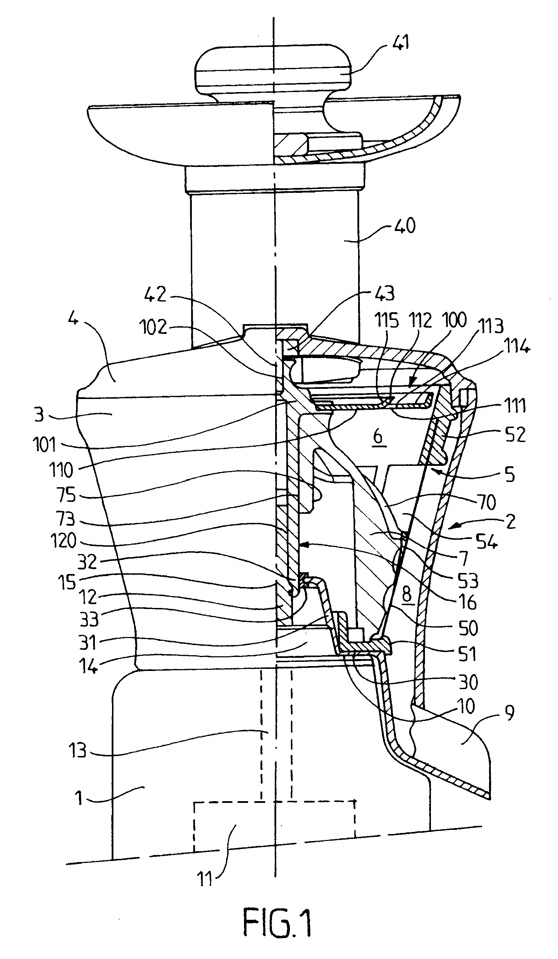

L'appareil électroménager de préparation culinaire illustré sur la figure 1 comporte un boîtier 1 et une enceinte de travail 2 comportant un récipient de travail 3 fermé par un couvercle 4. Le récipient de travail 3 présente une sortie d'évacuation 9. Une vis de pressage 7 amovible est agencée dans l'enceinte de travail 2. Un élément de filtration 5 sépare l'enceinte de travail 2 en un premier compartiment 6 logeant la vis de pressage 7 et un disque de prédécoupe 110, et un deuxième compartiment 8 présentant la sortie d'évacuation 9.

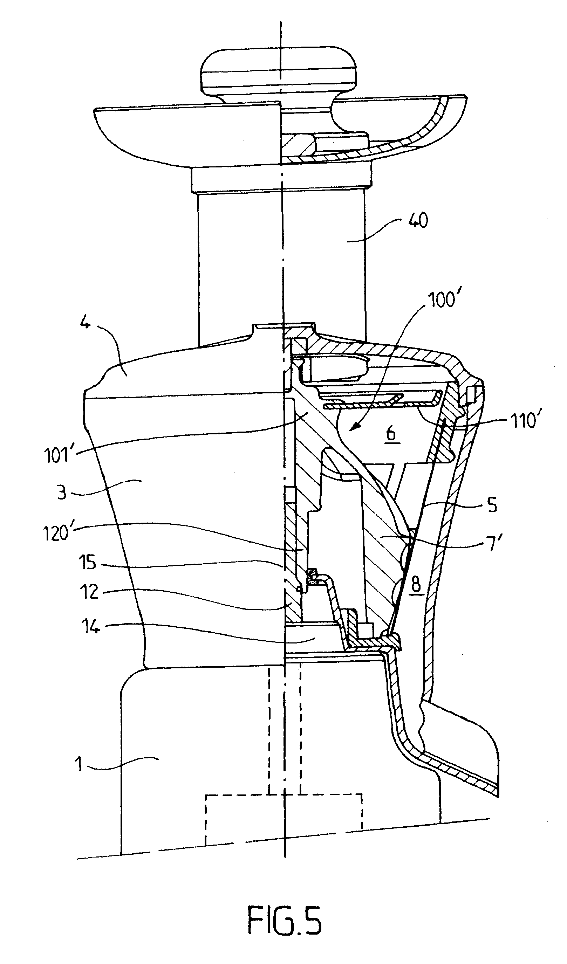

Le boîtier 1 forme un socle 10 sur lequel repose le récipient de travail 3. Le boîtier 1 loge un moteur électrique 11, représenté schématiquement. Le moteur électrique 11 est relié à une sortie d'entraînement supérieure 12, si désiré par l'intermédiaire d'un dispositif de transmission 13, représenté schématiquement. La sortie d'entraînement supérieure 12 est agencée sur le socle 10. Plus particulièrement, tel que visible sur les figures 1 et 5, la sortie d'entraînement supérieure 12 sort d'une protubérance 14 du socle 10. La sortie d'entraînement supérieure 12 est entraînée en rotation autour d'un axe 15. Tel que représenté sur les figures 1 et 5, l'axe 15 est vertical.

Dans l'exemple de réalisation illustré sur la figure 1, le récipient de travail 3 est monté amovible sur le boîtier 1. L'élément de filtration 5 est monté amovible dans le récipient de travail 3.

Le récipient de travail 3 présente une ouverture supérieure fermée par le couvercle 4. Ainsi l'ouverture supérieure du récipient de travail 3 permet de mettre en place et de retirer l'élément de filtration 5 et la vis de pressage 7. La sortie d'évacuation 9 est ménagée dans une partie inférieure du récipient de travail 3 à l'extérieur de l'élément de filtration 5. Le récipient de travail 3 présente une paroi de fond 30 comportant un bossage axial 31 prévu pour coiffer la protubérance 14.

Le récipient de travail 3 est prévu pour le passage d'un moyen de transmission 16 entre le moteur électrique 11 et la vis de pressage 7. A cet effet, le bossage axial 31 présente une ouverture axiale 32. Un joint 33 est avantageusement monté dans l'ouverture axiale 32 pour assurer une étanchéité avec les moyens de transmission 16.

Le couvercle 4 peut être verrouillé sur le récipient de travail 3, notamment au moyen de baïonnettes (non représentées sur les figures). Le couvercle 4 présente une goulotte d'introduction d'aliments 40. La goulotte d'introduction d'aliments 40 est disposée latéralement par rapport à l'axe de la vis de pressage 7. Un poussoir 41 est agencé dans la goulotte d'introduction d'aliments 40. Le couvercle 4 comporte un organe de guidage axial 42 avantageusement monté souple dans un élément élastique 43.

L'élément de filtration 5 comporte au moins une partie filtrante 50 agencée en regard de la vis de pressage 7. L'élément de filtration comporte avantageusement une base 51 et une couronne supérieure 52, la partie filtrante 50 étant agencée entre la base 51 et la couronne supérieure 52.

Un anneau intermédiaire 53 peut être agencé entre la base 51 et la couronne supérieure 52. Plus particulièrement, la partie filtrante 50 est agencée entre la base 51 et l'anneau intermédiaire 53. Une autre partie filtrante 54 est agencée entre l'anneau intermédiaire 53 et la couronne supérieure 52.

Plus particulièrement, l'élément de filtration 5 repose sur la paroi de fond 30 du récipient de travail 3. Le couvercle 4 maintient la couronne supérieure 52 de l'élément de filtration 5.

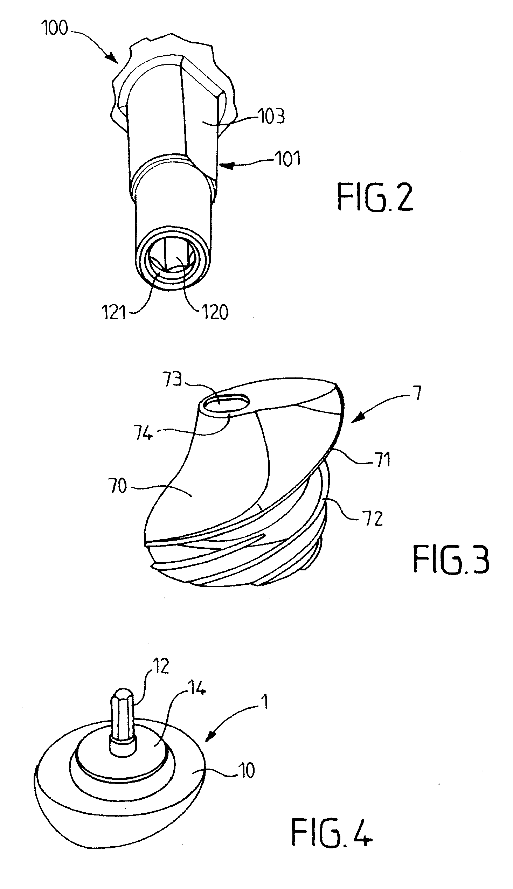

Tel que visible sur les figures 1 et 3, la vis de pressage 7 comporte un corps 70 muni de filets 71, 72 prévus pour pousser les aliments contre l'élément de filtration 5. La vis de pressage 7 comporte un passage axial 73, visible sur les figures 1 et 3.

Plus particulièrement, la vis de pressage 7 repose sur l'élément de filtration 5.

La vis de pressage 7 amovible est susceptible d'être entraînée en rotation par la sortie d'entraînement supérieure 12. L'entraînement en rotation de la vis de pressage 7 est assuré par un élément rotatif 100 monté amovible dans l'enceinte de travail 2. Plus particulièrement, l'élément rotatif 100 est monté amovible dans le premier compartiment 6. L'élément rotatif 100 comporte le disque de prédécoupe 110 et un organe d'entraînement 120 prévu pour être entraîné en rotation par la sortie d'entraînement supérieure 12, si désiré par l'intermédiaire d'un moyen de transmission complémentaire. L'élément rotatif 100 est amovible du premier compartiment 6 par l'ouverture supérieure du récipient de travail 3.

Tel que montré sur la figure 1, l'élément rotatif 100 comporte un moyeu 101.

Le joint 33 coopère avec le moyeu 101. En alternative, le joint 33 pourrait notamment coopérer avec la sortie d'entraînement supérieure 12 ou avec un noyau cylindrique 75 issu de la vis de pressage 7.

Tel que mieux visible sur la figure 2, l'organe d'entraînement 120 est ménagé dans une extrémité du moyeu 101.

Tel que montré sur la figure 1, le disque de prédécoupe 110 comporte un passage pour les aliments découpés 111 agencé entre un bord d'attaque supérieur 112 et un bord d'appui inférieur 113. Le bord d'appui inférieur 113 est prolongé par une surface d'appui 114 prévue pour recevoir les aliments issus de la goulotte d'introduction d'aliments 40.

Le bord d'attaque supérieur 112 peut par exemple être droit ou convexe. Lors de la rotation du disque de prédécoupe 110, le bord d'attaque supérieur 112 est prévu pour trancher les aliments reposant sur la surface d'appui 114.

De préférence, le bord d'attaque supérieur 112 est prolongé par une paroi supérieure 115 couvrant au moins partiellement le passage pour les aliments découpés 111. Avantageusement, la distance entre le bord d'attaque supérieur 112 et le bord d'appui inférieur 113 est inférieure à 1 cm dans le plan perpendiculaire à l'axe 15, et de préférence inférieure à 5 mm.

Le disque de prédécoupe 110 est fixé au moyeu 101 de manière indémontable par tout moyen approprié. Le disque de prédécoupe 110 peut ainsi être réalisé en métal, le moyeu 101 pouvant avantageusement être réalisé en matière plastique. Le moyeu 101 peut notamment être surmoulé sur le disque de prédécoupe 110. En alternative, le disque de prédécoupe 110 peut notamment être riveté au moyeu 101.

L'élément rotatif 100 comporte un logement 102 prévu pour recevoir l'organe de guidage axial 42. Le logement 102 est ménagé dans la partie supérieure du moyeu 101.

Dans l'exemple de réalisation illustré sur la figure 1, l'élément rotatif 100 est amovible par rapport à la vis de pressage 7. L'élément rotatif 100 disposé sur la vis de pressage 7 agencée dans le premier compartiment 6 entraîne en rotation la vis de pressage 7.

La figure 1 montre l'élément rotatif 100 en place dans le premier compartiment 6 entre la vis de pressage 7 et la goulotte d'introduction d'aliments 40. Plus particulièrement, l'élément rotatif 100 repose sur la vis de pressage 7.

En l'absence de la vis de pressage 7, l'élément rotatif 100 repose sur la sortie d'entraînement supérieure 12. A cet effet, l'élément rotatif 100 présente une paroi inférieure d'appui 121 prévue pour reposer sur une paroi supérieure d'appui de la sortie d'entraînement supérieure 12.

L'élément rotatif 100 présente une conformation d'entraînement 103, mieux visible sur la figure 2, prévue pour coopérer avec une conformation d'entraînement associée 74 de la vis de pressage 7, mieux visible sur la figure 3. Plus particulièrment, la conformation d'entraînement 103 est ménagée sur le moyeu 101 ; la conformation d'entraînement associée 74 est ménagée dans le passage axial 73.

L'appareil selon l'invention s'utilise et fonctionne de la manière suivante.

Lorsque l'élément rotatif 100 est en place dans le premier compartiment 6 entre la vis de pressage 7 et la goulotte d'introduction d'aliments 40, la sortie d'entraînement supérieure 12 est en prise avec l'organe d'entraînement 120 de l'élément rotatif 100 comportant le disque de prédécoupe 110. Ainsi le disque de prédécoupe 110 s'interpose entre la goulotte d'introduction d'aliments 40 et la vis de pressage 7. La vis de pressage 7 n'est pas directement accessible.

La conformation d'entraînement 103 de l'élément rotatif 100 est en prise avec la conformation d'entraînement associée 74 de la vis de pressage 7. Ainsi le disque de prédécoupe 110 est solidaire en rotation de la vis de pressage 7 lorsque l'élément rotatif 100 est en place dans l'enceinte de travail 2 entre la vis de pressage 7 et la goulotte d'introduction d'aliments 40. Lorsque l'utilisateur introduit des aliments dans la goulotte d'introduction d'aliments 40, les aliments sont d'abord prédécoupés par le disque de prédécoupe 110 avant d'être pressés par la vis de pressage 7 contre l'élément de filtration 5. L'exemple de réalisation de la figure 5 montre aussi un élément rotatif 100' comportant un disque de prédécoupe 110' et un organe d'entraînement 120' prévu pour être entraîné en rotation par la sortie d'entraînement supérieure 12. Si désiré, l'organe d'entraînement 120' peut être entraîné en rotation par la sortie d'entraînement supérieure 12 par l'intermédiaire d'un moyen de transmission complémentaire.

L'exemple de réalisation de la figure 5 diffère de l'exemple de réalisation de la figure 1 en ce que la vis de pressage 7' appartient à l'élément rotatif 100'. Ainsi la vis de pressage 7' est solidaire du moyeu 101' portant le disque de prédécoupe 110'. De ce fait, le disque de prédécoupe 110' est solidaire en rotation de la vis de pressage 7' lorsque l'élément rotatif 100' est en place dans l'enceinte de travail 2 entre la vis de pressage 7' et la goulotte d'introduction d'aliments 40. L'organe d'entraînement 120' de l'élément rotatif 100' est ménagé sur le moyeu 101'.

La vis de pressage 7' repose sur l'élément de filtration 5.

Tel que montré sur les figures 1 et 5, le disque de prédécoupe 110 ; 110' est interposé entre la vis de pressage 7 ; 7' et la goulotte d'introduction d'aliments 40 ; 40'. Le disque de prédécoupe 110 ; 110' en place dans l'enceinte de travail 2 empêche un accès direct à la vis de pressage 7 ; 7'. Les aliments introduits dans la goulotte d'introduction d'aliments 40 ; 40' sont d'abord découpés par le disque de prédécoupe 110; 110' puis pressés contre l'élément de filtration 5 par la vis de pressage 7 ; 7'. La vis de pressage 7 ; 7' ne peut être entraînée en rotation en l'absence du disque de prédécoupe 110 ; 110'.

A titre de variante, le récipient de travail 3 pourrait être solidaire du boîtier 1.

A titre de variante, le disque de prédécoupe 110, 110' ne comporte pas nécessairement un seul bord d'attaque supérieur 112. Le disque de prédécoupe 110, 110' peut porter plusieurs outils de coupe comportant un bord d'attaque supérieur. Le disque de prédécoupe 110, 110' n'est pas nécessairement prévu pour découper les aliments en tranches. Le disque de prédécoupe 110, 110' peut notamment être prévu pour râper les aliments.

A titre de variante, le disque de prédécoupe 110, 110' n'est pas nécessairement métallique. Notamment, le bord d'attaque supérieur 112 pourrait être formé par un insert métallique monté sur le disque de prédécoupe 110, 110', le disque de prédécoupe 110, 110' pouvant alors être issu du moyeu 101, 101'. En alternative, le disque de prédécoupe pourrait être réalisé en matière plastique résistante, telle que par exemple un polyamide chargé, et intégrer le bord d'attaque supérieur 112.

A titre de variante, l'axe 15 n'est pas nécessairement agencé selon la direction verticale, mais peut être agencé selon une direction principalement verticale, présentant un angle inférieur ou égal à 45° par rapport à la direction verticale.

A titre de variante la vis de pressage 7, 7' pourrait être agencée dans un récipient de travail 3 formant un conduit reliant la goulotte d'introduction d'aliments à la sortie d'évacuation, une grille et un couteau rotatif étant agencés entre la vis de pressage et la sortie d'évacuation, pour hacher les aliments compressés par la vis de pressage 7, 7'.

A titre de variante, le récipient de travail 3 ne loge pas nécessairement la majeure partie du disque de prédécoupe 110, 110', et/ou la majeure partie de la vis de pressage 7, 7' et/ou la majeure partie de l'élément de filtration 5.

La présente invention n'est nullement limitée aux exemples de réalisation décrits, mais englobe de nombreuses modifications dans le cadre des revendications.

## Revendications

1. Appareil électroménager de préparation culinaire, comportant un boîtier (1) logeant un moteur électrique (11) relié à une sortie d'entraînement supérieure (12), une enceinte de travail (2) comportant un récipient de travail (3) fermé par un couvercle (4) présentant une goulotte d'introduction d'aliments (40), le récipient de travail (3) présentant une ouverture supérieure fermée par le couvercle (4), le récipient de travail (3) présentant une sortie d'évacuation (9), une vis de pressage (7 ; 7') amovible susceptible d'être entraînée en rotation par la sortie d'entraînement supérieure (12) étant agencée dans l'enceinte de travail (2), l'ouverture supérieure du récipient de travail (3) permettant de mettre en place et de retirer la vis de pressage (7 ; 7'), **caractérisé en ce que** l'entraînement en rotation de la vis de pressage (7 ; 7') est assuré par un élément rotatif (100 ; 100') monté amovible dans l'enceinte de travail (2), ledit élément rotatif (100 ; 100') comportant un disque de prédécoupe (110 ; 110') et un organe d'entraînement (120 ; 120') prévu pour être entraîné en rotation par la sortie d'entraînement supérieure (12).

2. Appareil électroménager de préparation culinaire selon la revendication 1, **caractérisé en ce que** le disque de prédécoupe (110 ; 110') est solidaire en rotation de la vis de pressage (7 ; 7') lorsque l'élément rotatif (100 ; 100') est en place dans l'enceinte de travail (2) entre la vis de pressage (7 ; 7') et la goulotte d'introduction d'aliments (40).

3. Appareil électroménager de préparation culinaire selon l'une des revendications 1 ou 2, **caractérisé en ce que** le disque de prédécoupe (110; 110') comporte un passage pour les aliments découpés (111) agencé entre un bord d'attaque supérieur (112) et un bord d'appui inférieur (113).

4. Appareil électroménager de préparation culinaire selon l'une des revendications 1 à 3, **caractérisé en ce que** le récipient de travail (3) est monté amovible sur le boîtier (1).

5. Appareil électroménager de préparation culinaire selon l'une des revendications 1 à 4, **caractérisé en ce qu'**un élément de filtration (5) sépare l'enceinte de travail (2) en un premier compartiment (6) logeant la vis de pressage (7 ; 7') et le disque de prédécoupe (110 ; 110'), et un deuxième compartiment (8) présentant la sortie d'évacuation (9).

6. Appareil électroménager de préparation culinaire selon la revendication 5, **caractérisé en ce que** l'élément de filtration (5) est monté amovible dans le récipient de travail (3).

7. Appareil électroménager de préparation culinaire selon la revendication 6, **caractérisé en ce que** l'élément de filtration (5) repose sur une paroi de fond (30) du récipient de travail (3).

8. Appareil électroménager de préparation culinaire selon l'une des revendications 5 à 7, **caractérisé en ce que** la vis de pressage (7 ; 7') repose sur l'élément de filtration (5).

9. Appareil électroménager de préparation culinaire selon l'une des revendications 1 à 8, **caractérisé en ce que** l'élément rotatif (100) est amovible par rapport à la vis de pressage (7), l'élément rotatif (100) disposé sur la vis de pressage (7) entraînant en rotation la vis de pressage (7).

10. Appareil électroménager de préparation culinaire selon la revendication 9, **caractérisé en ce que** l'élément rotatif (100) repose sur la vis de pressage (7).

11. Appareil électroménager de préparation culinaire selon l'une des revendications 1 à 8, **caractérisé en ce que** la vis de pressage (7') appartient à l'élément rotatif (100').

## Patentansprüche

1. Elektrohaushaltsgerät zur Zubereitung von Speisen, das Folgendes umfasst: ein Gehäuse (1), das einen Elektromotor (11) aufnimmt, der mit einem oberen Antriebsausgang (12) verbunden ist, einen Arbeitsraum (2), der einen Arbeitsbehälter (3) umfasst, der durch einen Deckel (4) verschlossen ist, der einen Nahrungsmittel-Einfüllschacht (40) aufweist, wobei der Arbeitsbehälter (3) eine obere Öffnung aufweist, die durch den Deckel (4) verschlossen ist, wobei der Arbeitsbehälter (3) einen Auslass (9) aufweist, wobei eine abnehmbare Pressspindel (7; 7'), die von dem oberen Antriebsausgang (12) in Drehung versetzt werden kann, im Arbeitsraum (2) angeordnet ist, wobei die Pressspindel (7; 7') durch die obere Öffnung des Arbeitsbehälters (3) eingesetzt und entnommen werden kann, **dadurch gekennzeichnet, dass** der Drehantrieb der Pressspindel (7; 7') von einem Drehelement (100; 100') sichergestellt wird, das abnehmbar in dem Arbeitsraum (2) montiert ist, wobei das genannte Drehelement (100; 100') eine Vorschneidscheibe (110; 110') und ein Antriebsorgan (120; 120') umfasst, das dafür vorgesehen ist, von dem oberen Antriebsausgang (12) in Drehung versetzt zu werden.

2. Elektrohaushaltsgerät zur Zubereitung von Speisen nach Anspruch 1, **dadurch gekennzeichnet, dass** die Vorschneidscheibe (110; 110') drehfest mit der Pressspindel (7; 7') verbunden ist, wenn sich das Drehelement (100; 100') in dem Arbeitsraum (2) zwischen der Pressspindel (7; 7') und dem Nahrungsmittel-Einfüllschacht (40) befindet.

3. Elektrohaushaltsgerät zur Zubereitung von Speisen nach einem der Ansprüche 1 oder 2, **dadurch gekennzeichnet, dass** die Vorschneidscheibe (110; 110') einen Durchlass (111) für die geschnittenen Nahrungsmittel umfasst, der zwischen einer oberen Vorderkante (112) und einer unteren Stützkante (113) angeordnet ist.

4. Elektrohaushaltsgerät zur Zubereitung von Speisen nach einem der Ansprüche 1 bis 3, **dadurch gekennzeichnet, dass** der Arbeitsbehälter (3) abnehmbar auf dem Gehäuse (1) montiert ist.

5. Elektrohaushaltsgerät zur Zubereitung von Speisen nach einem der Ansprüche 1 bis 4, **dadurch gekennzeichnet, dass** ein Filterelement (5) den Arbeitsraum (2) in eine erste Kammer (6), die die Pressspindel (7, 7') und die Vorschneidscheibe (110; 110') aufnimmt, und eine zweite Kammer (8) unterteilt, die den Auslass (9) aufweist.

6. Elektrohaushaltsgerät zur Zubereitung von Speisen nach Anspruch 5, **dadurch gekennzeichnet, dass** das Filterelement (5) abnehmbar in dem Arbeitsbehälter (3) montiert ist.

7. Elektrohaushaltsgerät zur Zubereitung von Speisen nach Anspruch 6, **dadurch gekennzeichnet, dass** das Filterelement (5) auf einem Boden (30) des Arbeitsbehälters (3) aufliegt.

8. Elektrohaushaltsgerät zur Zubereitung von Speisen nach einem der Ansprüche 5 bis 7, **dadurch gekennzeichnet, dass** die Pressspindel (7; 7') auf dem Filterelement (5) aufliegt.

9. Elektrohaushaltsgerät zur Zubereitung von Speisen nach einem der Ansprüche 1 bis 8, **dadurch gekennzeichnet, dass** das Drehelement (100) von der Pressspindel (7) abnehmbar ist, wobei das auf der Pressspindel (7) sitzende Drehelement (100) die Pressspindel (7) in Drehung versetzt.

10. Elektrohaushaltsgerät zur Zubereitung von Speisen nach Anspruch 9, **dadurch gekennzeichnet, dass** das Drehelement (100) auf der Pressspindel (7) aufliegt.

11. Elektrohaushaltsgerät zur Zubereitung von Speisen nach einem der Ansprüche 1 bis 8, **dadurch gekennzeichnet, dass** die Pressspindel (7') zu dem Drehelement (100') gehört.

## Claims

1. Electrical household food preparation appliance, comprising a unit (1) housing an electric motor (11) connected to an upper drive output (12), a working chamber (2) having a working receptacle (3) closed by a lid (4) having a food introduction chute (40), the working receptacle (3) having an upper opening closed by the lid (4), the working receptacle (3) having a discharge outlet (9), a removable pressing screw (7; 7') that can be driven in rotation by the upper drive output (12) being arranged in the working chamber (2), the upper opening of the working receptacle (3) being designed so that the pressing screw (7; 7') can be fitted and removed, **characterised in that** the pressing screw (7; 7') is driven in rotation by a rotating element (100; 100') removably mounted in the working chamber (2), said rotating element (100; 100') having a pre-cutting disc (110; 110') and a drive member (120; 120') designed to be driven in rotation by the upper drive output (12).

2. Electrical household food preparation appliance according to claim 1, **characterised in that** the pre-cutting disc (110; 110') is locked in rotation with the pressing screw (7; 7') when the rotating element (100; 100') is positioned in the working chamber (2) between the pressing screw (7; 7') and the food introduction chute (40).

3. Electrical household food preparation appliance according to claim 1 or 2, **characterised in that** the pre-cutting disc (110; 110') includes a passage for the cut food (111) arranged between an upper leading edge (112) and a lower support edge (113).

4. Electrical household food preparation appliance according to one of claims 1 to 3, **characterised in that** the working receptacle (3) is removably mounted on the unit (1).

5. Electrical household food preparation appliance according to one of claims 1 to 4, **characterised in that** a filter element (5) divides the working chamber (2) into a first compartment (6) housing the pressing screw (7; 7') and the pre-cutting disc (110; 110'), and a second compartment (8) having the discharge outlet (9).

6. Electrical household food preparation appliance according to claim 5, **characterised in that** the filter element (5) is removably mounted in the working receptacle (3).

7. Electrical household food preparation appliance according to claim 6, **characterised in that** the filter element (5) rests on a bottom wall (30) of the working receptacle (3).

8. Electrical household food preparation appliance according to one of claims 5 to 7, **characterised in that** the pressing screw (7; 7') rests on the filter element (5).

9. Electrical household food preparation appliance according to one of claims 1 to 8, **characterised in that** the rotating element (100) can be removed from the pressing screw (7), the rotating element (100) arranged on the pressing screw (7) driving the pressing screw (7) in rotation.

10. Electrical household food preparation appliance according to claim 9, **characterised in that** the rotating element (100) rests on the pressing screw (7).

11. Electrical household food preparation appliance according to one of claims 1 to 8, **characterised in that** the pressing screw (7') is part of the rotating element (100').
